# EUROPEAN PATENT SPECIFICATION

(11) **EP 1 289 755 B1**
(45) Date of publication and mention of the grant of the patent: **12.05.2004**
(21) Application number: 01940717.0
(22) Date of filing: 13.06.2001
(51) Int. Cl.: B32B 27/12, B32B 7/00, A43B 13/12

(54) **CONDUCTIVE LAMINATED INSOLE AND STIFFENERS**
LEITFÄHIGE MEHRSCHICHTIGE INSOHLE UND VERSTEIFUNGSKAPPEN
SEMELLE ET CONTREFORTS EN STRATIFIE CONDUCTEUR

(30) Priority: 16.06.2000 GB 0014724; 08.12.2000 GB 0030085
(43) Date of publication of application: 12.03.2003
(73) Proprietor: Texon UK Limited, Leicester LE4 5BX (GB)
(72) Inventor: JOHNSON, Susan Gwynneth, Botcheston, Leicester LE9 9FH (GB); CROSS, Susan Colleen, Thurmaston, Leicester LE4 8HB (GB)
(86) International application number: PCT/GB2001/002571
(87) International publication number: WO 2001/096109

(56) References cited:
- US-A- 4 150 418
- US-A- 5 233 769
- DATABASE WPI Section Ch, Week 199508 Derwent Publications Ltd., London, GB; Class A14, AN 1995-056908 XP002175611 & JP 06 335401 A (ACHILLES CORP KK), 6 December 1994 (1994-12-06)
- PATENT ABSTRACTS OF JAPAN vol. 1995, no. 04, 31 May 1995 (1995-05-31) & JP 07 009607 A (IDEMITSU PETROCHEM CO LTD;OTHERS: 01), 13 January 1995 (1995-01-13)

## Description

### Field of the Invention

This invention relates to laminar materials suitable for use in the manufacture of shoes, methods of making the same and shoe components comprising said laminar materials, especially shoe insoles. The laminar materials according to the invention may also be suitable for making shoe stiffener materials, such as e.g. toe stiffeners or heel counters.

The term "shoe" where used herein is to be understood as denoting outer footwear generally, whether ready to wear or in the course of manufacture.

### Background to the Invention

For use in certain types of environments, for example in safety shoes (which designation covers safety, protective and occupational footwear), it is desirable that the shoe insole be both electrically conductive, and resistant to water. The electrical conductivity aspect is particularly important, as it enables the manufacture of safety shoes which are considered to be both conductive and anti-static, which properties are desirable in certain industrial environments where such properties are required. To this end, "conductive" shoes are typically considered to have a resistance of up to about 100 kΩ, whilst "anti-static" shoes typically have a resistance in the region of 100kΩ to 1000MΩ. To achieve suitable electrical conductivity, it is necessary to make the insole of the shoe suitably conductive.

It is well known to make shoe insoles comprising non-woven needled fibre fabric; for example, such materials are supplied by the applicant company under their registered trademark "Texon". Non-woven fibre fabric materials can be used as one or more layers of a laminar material.

It is also known to manufacture laminated insoles, which comprise for example a central core layer of an extrudable thermoplastic material, laminated between two layers of non-woven fabric. Such insoles have again been prepared by the applicant company.

It is also known to prepare for use in shoe insoles and stiffeners a non-woven fabric which contains with conductive fibres, such as stainless steel fibres.

It is also known to manufacture shoe insole materials from non-woven fabrics comprising impregnated humectant materials. The impregnated humectants retain moisture in the fabric, and hence facilitate its electrical conductivity. However, a problem with such materials is that the degree of conductivity provided is relatively low, and indeed such materials may not function effectively in very dry environments.

One of the various advantages of the present invention is to provide an effective shoe insole. Another advantage is to provide a cushioning insole.

Another advantage of the present invention is to provide a conductive shoe insole. It is a further object of the invention to provide a conductive insole wherein the conductive properties are not dependent on the relative humidity.

A further advantage is to provide a cushioning insock.

It is a further advantage of the invention to provide a conductive shoe insole which has a marked degree of water resistance, which may be of use in the manufacture of conductive and/or anti-static safety shoes.

It is also an advantage of the present invention to provide a conductive shoe insole that has a desired degree of stiffness.

Thus, according to a first aspect of the invention, there is provided a conductive laminar material for shoe insoles or stiffeners comprising an extruded thermoplastic polymer layer containing a conductive material, and more than one fibre fabric layers each containing a conductive material, characterised in that the thermoplastic polymer layer is laminated between two fibre fabric layers, and is a minimum of 0.3 mm. in thickness to provide a degree of desired stiffness.

In a highly preferred embodiment at least one of the fibre fabric layers comprises a non-woven fabric.

The non-woven fabric may comprise stainless steel fibres for conductivity.

Preferably a fibre fabric layer is impregnated with latex.

Preferably the latex is a stiffening latex comprising styrene-butadiene rubber.

Alternatively the latex comprises a soft resilient synthetic rubber binder.

In a preferred embodiment the two fibre fabric layers are impregnated each with a different latex.

In a preferred embodiment the conductive material in the thermoplastic polymer layer comprises conductive carbon.

Preferably the thermoplastic polymer layer comprises polypropylene.

In a highly preferred embodiment a shoe insole or footbed or stiffener comprises material according to the first aspect of the invention.

In a highly preferred embodiment, the laminar material has the thermoplastic extrudable layer containing the conductive material laminated between two (not necessarily identical) fabric layers containing a conductive material.

Preferably the thermoplastic extrudable layer comprises polypropylene, though other thermoplastic extrudable polymers are suitable, such as polyethylene, ethylene vinyl acetate, PVC, nylon or polycarbonate. Suitable thermoplastic extrudable materials must not be brittle, must have suitable flexibility properties, and must also be water resistant.

A three-layer laminate as described above is a preferred aspect of the invention, although other layers (e.g. a fourth) could be contemplated, for example, for improved comfort and/or aesthetic appearance, provided any subsequent layers fulfilled the conductivity requirements of the other layers.

The conductive material included in the thermoplastic extrudable layer may be any suitable conductive material, so as to provide the thermoplastic extrudable layer with a suitably low electrical resistance, such as for example 100/Ω cm² or less. A preferred conductive material is conductive carbon powder, such as carbon black which may provide effective conductivity (as well as retaining suitable integrity and extrudability properties) at a level of around 40-60% by weight of the thermoplastic extrudable layer. A suitable material for providing the necessary conductivity in the extrudable layer is ECP110 (a polypropylene/carbon mixture), available from TBA Electroconductive Products.

The fibre fabric layer or layers may be woven or non-woven, but are preferably non-woven. Important properties of the outer layer or layers is that they must be able to key to the thermoplastic extrudable layer, ideally must be capable of being stiffened by known techniques (e.g. latex impregnation), and that they must be capable of being attached to a sole. Suitable non-woven fabrics include needled non-woven fabrics of a type well known to those skilled in the art. The fabric may principally comprise either natural or synthetic fibres. Any suitable fibres may be used but the preferred fibres are polyester fibres. The fibres typically have a decitex of from 1.4 to 17 and a staple length of from 30 to 80 mm. The density of the non-woven fibre fabric before impregnation is typically from 0.01 to 0.2 gcm-³ (10 to 200 kgm-³). Particularly preferred fibres are polyesters of 1.4-5.0 decitex. Examples of suitable fibres include polyethylene terephthalate, nylon, viscose, and polypropylene fibres. A preferred fibre is polyethylene terephthalate.

A preferred conductive material for incorporation in the fibre fabric layer(s) is stainless steel fibres, though other conductive materials such as copper coated or nickel coated fibres may also be suitable. The conductive material is present in an amount sufficient to provide the desired high conductivity (low resistance) in the fibre fabric, which again may ideally be less than about 100Ω/cm². When the conductive material is stainless steel fibres, preferably these are present at a level greater than about 1% by weight of the fibre fabric, and optimally at a level of about 2-5% by weight of the fibre fabric.

The laminate of the thermoplastic extrudable conductive layer and the fibre fabric layer(s) may be bonded together with an adhesive but if this is done the adhesive must either be conductive itself, or must be applied in such a way as to not adversely affect the conductive properties of the laminate, for example by being applied in spots or powdered.

Preferably, the layers of the laminate are heat laminated together, i.e. the fibre fabric layer(s) are fused into the soft thermoplastic extrudable layer shortly after it is extruded whilst it is still soft. This negates the need for bonding of the laminate layers using an adhesive. An adhesive may be used to attach either the shoe uppers to the insole, or the shoe insole to the shoe sole, but again this is ideally done in such a way that a conductive path is maintained between the shoe insole and the sole. A preferred adhesive for attaching a sole to an insole is polyurethane, whilst a preferred adhesive for attaching an upper to an insole is polyester.

A preferred laminar material in accordance with the invention has a hot-melt adhesive coating on the surface of one fabric layer remote from the polypropylene core. This adhesive coating can be used to fix a shoe component made from the laminar material into a shoe. Alternatively, the layers of the laminar material may be secured together by stitching.

Fibre fabric layer(s) according to the invention may be any suitable thickness, and need not be the same thickness.

The laminar materials of the present invention are preferably impregnated with a substance that improves the stiffness of the laminar material. Suitable stiffening substances include latexes. Preferably a high-styrene latex is used. Such techniques for stiffening woven and non-fibre fabrics are well known in the art as is the manipulation of the stiffness of an insole or stiffener to provide the appropriate stiffness. Suitable stiffening lattices include styrene-butadiene rubber (SBR) latex, nitrile-butadiene rubber (NBR) latex or natural rubber latex, with the latex being used at such a level so as to provide a fabric: dry binder (comprising e.g. latex plus fillers) ratio in the region 10:1 to 1:3.

In a preferred aspect of the invention, the laminar material can be used to create a composite insole/insock/footbed material which provides a soft cushioning comfort layer next to the foot, along with a relatively rigid lower (e.g. third) layer to allow the material to resist the forces of lasting.

In such an embodiment the comfort layer may be provided in a single layer adjacent the foot, on the foot side of the thermoplastic layer, and preferably comprises a layer of non-woven needlefelt material impregnated with a relatively soft resilient synthetic rubber binder, typically with a Tg of less than 0°C. Such a comfort layer also additionally contains a conductive material, which may conveniently be the same conductive material used in any other fibre fabric layer(s), such as e.g. stainless steel fibres.

In such embodiments, the layer(s) below the comfort layer such as e.g. the thermoplastic layer will preferably have a relatively high stiffness compared to the comfort layer. Any further fabric layer(s) on the sole side of the thermoplastic layer might also typically have a relatively high stiffness compared to the comfort layer.

The laminar materials of the present invention are particularly suitable for use in the production of shoe insoles.

In a preferred embodiment the present invention provides a laminar material which is impregnated with a high-styrene SBR latex to increase stiffness and comprises:
(a) a polypropylene core material containing approximately 50% by weight of the core of conductive carbon; and
(b) a non-woven polyester fabric layer containing stainless steel fibres at a level of 2-5% by weight of the fabric laminated to each side of the core.

The total thickness of the laminar material of the present invention preferably does not exceed 8 mm and is more preferably from 1 to 5 mm in thickness, most preferably from 1.5 to 4.5 mm. Preferably the core has a thickness of from 0.3 to 3 mm, more preferably from 0.5 to 1.5 mm, most preferably from 0.7 to 1.2 mm.

The laminar materials of the invention typically have a resistance measured at 1.8 KPa on a current limited voltage generator (current limited at 50 mA) of from about 100 to about 600 ohms over an area of 10 cm².

A source of stainless steel fibres for incorporation in the fibre fabric is Bekinox PES 12/50 (a 50:50 blend of stainless steel fibres (diameter 12µ, 9.1 dtex, staple length 50mm ex Bekaert) and polyester fibres, (3.3 dtex staple length 75mm)). The fibre fabrics used in the laminate may be of different weights, and may individually have weights of 100-500 g/m².

The weight ratios used in practice will depend upon the desired properties of the laminar material. For example, where it is desired for the insole to have some cushioning properties, the ratio of the impregnated stiffening material to the other components of the laminar material should not be so great that the inherent resilience of the fibre fabric and the polypropylene is compromised or the fabric made too stiff to perform effectively as a cushion insole. Where the laminar material is intended to be used as a structural shoe insole, in the manufacture of a shoe, the stiffness imparted must be sufficient to withstand the stresses imparted during manufacture of the shoe. Where the laminar material is to be used as a cushion insock, introduced into the shoe after manufacture, the rigidity requirements are lower and less stiffening material may be necessary.

In another aspect of the present invention there is provided a method of making a laminar material which comprises the following steps:
- providing an extruded sheet of thermoplastic material with a minimum thickness of 0.3 mm. comprising an upper surface and a lower surface, the extruded sheet containing a conductive material and being extruded through a die; and
- attaching thereto a first layer and a second layer of fibre fabric containing a conductive material, the first fibre fabric layer being attached to the upper surface of the sheet and the second fibre fabric layer being attached to the lower surface of the sheet, to form a laminate; and
- impregnating or coating at least one of the fibre fabric layers with a stiffening material; and
- shaping the laminate to form a shoe insole or stiffener.

Conveniently two layers of fibre fabric are attached to the thermoplastic extrudable material sheet, one on each side. Conveniently the layer(s) of fibre fabric are attached to the thermoplastic extrudable material by hot lamination, the thermoplastic polymer of the sheet being softened by heat and caused, by the application of pressure, to adhere to the fabrics. This conveniently occurs during the process of extruding the thermoplastic material.

In a highly preferred method the fibre fabric layers are impregnated or coated so as to have different stiffnesses.

The fibre fabric layers may be impregnated or coated with the stiffening material either before they are combined with the thermoplastic extrudable layer to produce the laminar material or after the laminar material has been formed. Preferably the impregnation or coating step is performed after the fibre fabric layers have been laminated to the thermoplastic extrudable layer. Where different stiffnesses are required in different layers, this can be done for example by treating the different fibre layers of laminar material with different stiffening binders in separate coating or impregnation processes.

Suitable methods of impregnation are well known in the art. Any suitable method can be used. The preferred method is relatively simple. The material into which the stiffening material is to be introduced is presented to a bath of impregnant, usually with some form of pressure to ensure adequate through penetration of the impregnant into the material. In particular, distribution of stiffening or rubbery binders within the fabric layers can be controlled by a nip rolling process on the wet impregnated or coated material.

More specifically, the stiffening material may conveniently be applied by passing the material to be impregnated through an impregnating apparatus of known construction in which the material to be impregnated is fed through an impregnating bath in which the liquid stiffening material (impregnant) is absorbed by the fabric layers and then passed through a nip between a pair of calender rollers to control the amount of liquid material retained in the fabric layers. Other methods of controlling the amount and distribution of material retained in the fabric layers are described in our earlier published patent application PCT/GB99/02314. Any of the methods described in that document can be used in the production of the laminar materials of the present invention as appropriate. The wet binder once applied and distributed may then be dried and cured if necessary, for example using heated air.

A method in accordance with the invention also if necessary comprises the further step of applying a coating of an adhesive composition to the surface of a fibre layer or layers, for example for attaching an insole to a sole, as described above

In particular where the laminar material is used as an insole having a comfort layer, a further stage may also be incorporated in the manufacturing process, namely the inclusion in the fabric layer of the wear surface (i.e. that layer of the laminar material which in use is nearest the foot) of a soft resilient material, such as e.g. nitrile rubber. This allows the appearance of the wear surface to be enhanced, as well as enhancing the softness and comfort of the comfort layer, for example by sueding or embossing various patterns into the surface. Coloured pigments can also be included into binders to enhance finished appearance.

Preferred non-woven fibre fabric materials for use according to the invention are needled fabrics, the production techniques for which are well known. Where the fibre fabric is a non-woven one and contains e.g. Bekinox PES 12/50 stainless steel fibres, the fabric fibres may be premixed with the appropriate level of Bekinox PES 12/50 before being carded and needled to produce a non-woven fabric in a conventional manner.

Whereas, in a preferred method in accordance with the invention, the fabric layers are impregnated with the stiffener material after they have been laminated to the polypropylene core, the fibre layers may be impregnated with the stiffener material before lamination to the core, the fabric layers having been dried prior to lamination to the core.

### Description of the Invention

There now follows a detailed description of laminar materials, and methods of making the material and a shoe insole made of the material embodying the invention. It will be realised that the materials, methods and shoe insoles have been selected for description to illustrate the invention by way of example only.

### EXAMPLES

### Example 1

A suitable laminate for a conductive shoe insole may be formed by extruding through a die a core thermoplastic extrudable sheet comprising polypropylene and ECP110 (carbon) to provide a sheet containing 50% by weight carbon having a weight of 800g/m².

On either side of this is laminated a non-woven polyester fabric having a density of 300g/m² containing 3% by weight of stainless steel fibres (Bekinox PES 12/50).

The laminate is rolled and cooled to provide a laminate of gauge 3.5mm, having a weight of 1400g/m².

The laminate is subsequently impregnated in a latex bath containing the following composition (grams wet):

| | Parts |
|---|---|
| Dow X Z 92070 (50% solids) | 135 |
| Synthomer 7050 (51% solids) | 33 |
| Speswhite clay filler (60% solids) | 281 |
| Water | 54 |
| Pigment | 12 |

The laminate is subsequently dried and calendered to provide a laminate of weight 2,800g/m² and 3.1 mm gauge.

The dried laminate is then cut to shape and forms a suitable conductive laminate insole according to the invention.

### Example 2

A cushioning laminate footbed material is produced according to the general method of Example 1, the extrudable core having the same composition that in Example 1 and a thickness of 0.5mm.

Two fabrics are prepared for lamination onto the extrudable core. The first, intended for location on the wear side, comprises 30% Moplefan PP (2.5 x 38mm), 10% of a Bekinox blend of stainless steel and PET, 60% polyester (1.7 x 3.8mm), and has a gauge of 3.7mm and a weight of 800g/m². The back surface fabric for location on the opposite side of the core contains 10% of the Bekinox blend referred to above, 30% polyester (3.3 x 60mm), 30% polyester (50 x 60mm), and 30% polyester (1.7 x 60mm), and has a gauge of 1.5mm and a weight of 125gm.

The two fabrics are simultaneously laminated to the 0.5mm extruded core at the point of extrusion. The laminate is rolled and cooled and has a gauge of around 4.62mm and a weight of around 1574g/m².

The non-woven laminate is then impregnated (both fabrics simultaneously) with a dilute (10% solids) nitrite rubber binder containing pigment. The dry binder add on was 5% of the total non-woven weight. The binder is dried and cured at 120-140°C. The wear surface of the material is subsequently enhanced by embossing a pigskin pattern using a heated embossed roller at 185°C. The backside of the material can further be coated with a stiffening latex such as a styrene butadiene containing 60 - 80% styrene.

The dried laminate is than cut to shape and forms a suitable conductive laminate insole according to the invention.

## Claims

1. A conductive laminar material for shoe insoles or stiffeners comprising an extruded thermoplastic polymer layer containing a conductive material, and more than one fibre fabric layers each containing a conductive material, **characterised in that** the thermoplastic polymer layer is laminated between two fibre fabric layers, and is a minimum of 0.3 mm. in thickness to provide a degree of desired stiffness.

2. A material according to claim 1, wherein at least one of the fibre fabric layers comprises a non-woven fabric.

3. A material according to claim 2, wherein the non-woven fabric comprises stainless steel fibres.

4. A material according to any one of the preceding claims, wherein a fibre fabric layer is impregnated with a latex.

5. A material according to claim 4 wherein the latex is a stiffening latex comprising styrene-butadiene rubber.

6. A material according to claim 4 wherein the latex comprises a soft resilient synthetic rubber binder.

7. A material according to claim 4 wherein two fibre fabric layers are impregnated each with a different latex.

8. A material according to any one of the preceding claims wherein the conductive material in the thermoplastic polymer layer comprises conductive carbon.

9. A material according to any one of the preceding claims wherein the thermoplastic polymer layer comprises polypropylene.

10. A shoe insole or footbed or stiffener comprising a material according to any of the preceding claims.

11. A method of making a conductive laminar material which comprises the steps of:
- providing an extruded sheet of thermoplastic material with a minimum thickness of 0.3 mm. comprising an upper surface and a lower surface, the extruded sheet containing a conductive material and being extruded through a die; and
- attaching thereto a first layer and a second layer of fibre fabric containing a conductive material, the first fibre fabric layer being attached to the upper surface of the sheet and the second fibre fabric layer being attached to the lower surface of the sheet, to form a laminate; and
- impregnating or coating at least one of the fibre fabric layers with a stiffening material; and
- shaping the laminate to form a shoe insole or stiffener.

12. A method of making a conductive laminar material according to claim 11 wherein the layers of fibre fabric are attached to the thermoplastic material by hot lamination, the thermoplastic polymer of the sheet being softened by heat and caused, by the application of pressure to adhere to the fabrics.

13. A method of making a conductive laminar material according to claim 12 wherein the hot lamination occurs during the process of extruding the thermoplastic material.

14. A method according to any of claims 11 to 13, wherein the fibre fabric layers are impregnated or coated so as to have different stiffnesses.

## Patentansprüche

1. Leitendes laminares Material für Schuhbrandsohlen und -steifen, umfassend eine ein leitendes Material enthaltende extrudierte thermoplastische Polymerschicht und mehr als eine Fasergewebelage, die jeweils ein leitendes Material enthalten, **dadurch gekennzeichnet, dass** die thermoplastische Polymerschicht zwischen zwei Fasergewebelagen laminiert ist und eine Dicke von mindestens 0,3 mm hat, um einen Grad an gewünschter Steifigkeit zu bieten.

2. Material nach Anspruch 1, bei dem wenigstens eine der Fasergewebelagen einen Vliesstoff umfasst.

3. Material nach Anspruch 2, bei dem der Vliesstoff Edelstahlfasern umfasst.

4. Material nach einem der vorherigen Ansprüche, bei dem eine Fasergewebelage mit einem Latex imprägniert ist.

5. Material nach Anspruch 4, bei dem der Latex ein Versteifungslatex ist, der Styrol/Butadien-Kautschuk umfasst.

6. Material nach Anspruch 4, bei dem der Latex ein weiches, elastisches, synthetisches Gummibindemittel umfasst.

7. Material nach Anspruch 4, bei dem zwei Fasergewebelagen jeweils mit einem anderen Latex imprägniert sind.

8. Material nach einem der vorherigen Ansprüche, bei dem das leitende Material in der thermoplastischen Polymerschicht leitenden Kohlenstoff umfasst.

9. Material nach einem der vorherigen Ansprüche, bei dem die thermoplastische Polymerschicht Polypropylen umfasst.

10. Schuhbrandsohle oder Fußbett oder Steife, umfassend ein Material nach einem der vorherigen Ansprüche.

11. Verfahren zur Herstellung eines leitenden laminaren Materials, umfassend die folgenden Schritte:
- Bereitstellen einer extrudierten Folie aus Thermoplastmaterial mit einer Mindestdicke von 0,3 mm, umfassend eine Oberseite und eine Unterseite, wobei die extrudierte Folie ein leitendes Material enthält und durch eine Extrusionsdüse extrudiert wird; und
- Befestigen einer ersten Lage und einer zweiten Lage von ein leitendes Material enthaltendem Fasergewebe, wobei die erste Fasergewebelage an der Oberseite der Folie und die zweite Fasergewebelage an der Unterseite der Folie befestigt ist, um ein Laminat zu bilden; und
- Imprägnieren oder Beschichten von wenigstens einer der Fasergewebelagen mit einem Versteifungsmaterial; und
- Gestalten des Laminats zu einer Schuhbrandsohle odersteife.

12. Verfahren zur Herstellung eines laminaren Materials nach Anspruch 11, bei dem die Fasergewebelagen durch Heißlaminieren an dem Thermoplastmaterial befestigt werden, wobei das thermoplastische Polymer der Folie durch Hitze erweicht und durch Beaufschlagung von Druck auf die Gewebe geklebt wird.

13. Verfahren zur Herstellung eines leitenden laminaren Materials nach Anspruch 12, bei dem das Heißlaminieren während des Vorgangs des Extrudierens des Thermoplastmaterials erfolgt.

14. Verfahren nach einem der Ansprüche 11 bis 13, bei dem die Fasergewebelagen so imprägniert oder beschichtet werden, dass sie unterschiedliche Steifigkeiten haben.

## Revendications

1. Un matériau laminaire conducteur pour les semelles intérieures ou raidisseurs de chaussures comprenant une couche polymère thermoplastique extrudée contenant un matériau conducteur, et plus d'une couche de tissu fibres, chacune contenant un matériau conducteur, **caractérisé en ce que** la couche polymère thermoplastique est laminée entre deux couches de tissu fibres, et a une épaisseur minimum de 0,3 mm pour fournir une certaine raideur désirée.

2. Un matériau conformément à la revendication 1, dans quoi au moins une des couches de tissu fibres comprend un tissu non tissé.

3. Un matériau conformément à la revendication 2, dans quoi le tissu non tissé comprend des fibres en acier inoxydable.

4. Un matériau conformément à l'une quelconque des revendications précédentes, dans quoi une couche de tissu fibres est imprégnée d'un latex.

5. Un matériau conformément à la revendication 4, dans quoi le latex est un latex raidisseur comprenant du caoutchouc styrène-butadiène.

6. Un matériau conformément à la revendication 4, dans quoi le latex comprend un liant caoutchouc synthétique résilient souple.

7. Un matériau conformément à la revendication 4, dans quoi deux couches de tissu fibres sont imprégnées chacune d'un latex différent.

8. Un matériau conformément à l'une quelconque des revendications précédentes, dans quoi le matériau conducteur dans la couche polymère thermoplastique comprend du carbone conducteur.

9. Un matériau conformément à l'une quelconque des revendications précédentes, dans quoi la couche polymère thermoplastique comprend du polypropylène.

10. Une semelle intérieure ou lit de pied ou raidisseur de chaussures comprenant un matériau conformément à l'une des revendications précédentes.

11. Une méthode pour réaliser un matériau laminaire conducteur qui comprend les étapes suivantes :
- la fourniture d'une feuille extrudée de matériau thermoplastique ayant une épaisseur minimum de 0,3 mm comprenant une surface supérieure et une surface inférieure, la feuille extrudée contenant un matériau conducteur et étant extrudée à travers une filière ; et
- la fixation à cette feuille d'une première couche et d'une deuxième couche de tissu fibres contenant un matériau conducteur, la première couche de tissu fibres étant fixée à la surface supérieure de la feuille et la deuxième couche de tissu fibres étant fixée à la surface inférieure de la feuille, pour former un laminé ; et
- l'imprégnation ou le revêtement d'au moins une des couches de tissu fibres avec un matériau raidisseur ; et
- le façonnage du laminé pour former une semelle intérieure ou raidisseur de chaussure.

12. Une méthode pour réaliser un matériau laminaire conducteur conformément à la revendication 11, dans quoi les couches de tissu fibres sont fixées au matériau thermoplastique par lamination à chaud, le polymère thermoplastique de la feuille étant ramolli par la chaleur et, suite à l'application de pression, adhérant aux tissus.

13. Une méthode pour réaliser un matériau laminaire conducteur conformément à la revendication 12, dans quoi la lamination à chaud se produit pendant le processus d'extrusion du matériau thermoplastique.

14. Une méthode conformément à l'une quelconque des revendications 11 à 13, dans quoi les couches de tissu fibres sont imprégnées ou recouvertes de façon à avoir des raideurs différentes.
